# EUROPEAN PATENT APPLICATION

(11) **EP 1 786 160 A1**
(43) Date of publication of application: **16.05.2007**
(21) Application number: 06023653.6
(22) Date of filing: 14.11.2006
(51) Int. Cl.: H04L 12/58, H04L 12/18, G06Q 10/00

(54) **Apparatus and method for transmitting a message**

(30) Priority: 15.11.2005 KR 20050109314
(71) Applicant: LG Electronics Inc., Yongdungpo-Gu Seoul 150-010 (KR)
(72) Inventor: Jung, Eun-Young, Seodaemun-Gu, Seoul (KR)
(74) Representative: Katérle, Axel

(57) **Abstract**

An apparatus for transmitting a message includes a message generator in which a data structure is generated. The data structure includes a plurality of address fields. Each address field includes at least one message recipient address. The message generator generates a message which includes a common message field and a hidden message field. The apparatus also includes a controller which controls transmission of the generated message to message recipient addresses entered into the plurality of address fields.

## Description

### BACKGROUND OF THE INVENTION

### 1. Field of the Invention

The present invention relates to message communication, and more particularly, to one-to-many message communication.

### 2. Description of the Background Art

Currently, email and other message services are widely popular forms of communication, both for business and for personal uses. Email and other message services are currently provided over the Internet and over mobile telecommunication networks. As the processing capabilities of mobile devices and the bandwidth available to mobile devices have improved, many mobile communication network operators have transitioned from supporting only voice communication to embracing data communication applications.

A message service user may perform a one-to-one message communication, in which the user sends a message to a single recipient. Alternately, the user may perform a one-to-many message communication, in which the user broadcasts a single message to multiple recipients. A one-to-many message communication is a popular method of sending information to multiple people who share a common interest. Many companies use a one-to-many message communication for advertising and public relations. Messages may have different class types, such as advertisement, information or personal. Further, message notification allows an immediate or deferred retrieval of messages.

However, conventional one-to-many message communication only allows a single message to be broadcasted to a group of recipients. If a user wants to send an additional message to a subgroup of the group of recipients, he must write and transmit the additional message separately.

### SUMMARY OF THE INVENTION

One of the features of the present invention is that it allows a user to transmit an additional message to a specific subgroup of recipients in a one-to-many message transmission.

To achieve at least these features, there is provided an apparatus for transmitting a message which includes a message generator in which a data structure is generated. The data structure includes a plurality of address fields, and each address field includes at least one message recipient address. The message generator generates a message which includes a common message field and a hidden message field. The apparatus also includes a controller which controls transmission of the generated message to message recipient addresses entered into the plurality of address fields.

The message generator may generate a first message which includes a common message entered into the common message field and a second message which includes the common message and a hidden message entered into the hidden message field. The plurality of address fields may include a first address field and a second address field. The controller may control transmission of the first message to at least one message recipient address entered into the first address field and transmission of the second message to at least one message recipient address entered into the second address field.

The message generator may set contents entered into the hidden message field to be visible only to recipients whose addresses are entered into a specific address field of the plurality of address fields. The controller may control transmission of the generated message to all of the message recipient addresses included in each of the plurality of address fields.

The data structure may be a table including a recipient input structure and a message input structure. The recipient input structure may include the plurality of address fields, and the plurality of address fields may include a first address field and a second address field. Recipients whose addresses are entered into the second address field may receive a common message and a hidden message. Recipients whose addresses are entered into the second address field may receive a hidden message.

The message input structure may include a common message field and a hidden message field. A hidden message entered into the hidden message field may be visible only to specific recipients.

There is also provided a method for transmitting a message which includes entering at least one message recipient address into a first address field and entering at least one message recipient address into a second address field, entering a first message into a first message field and entering a second message into a second message field, transmitting the first message to each message recipient address entered into the first address field, and transmitting the first and second messages to each message recipient address entered into the second address field.

The second message may be transmitted only to a message recipient address entered into the second address field. The method may also include transmitting the second message to each message recipient address entered into the first address field, where the second message is visible only to a message recipient address entered into the second address field.

There is also provided a method for transmitting a message which includes entering at least one message recipient address into a first address field and entering at least one message recipient address into a second address field, entering a common message and a hidden message, and transmitting the common message and the hidden message to each message recipient address entered into the first and second address fields, where the hidden message is visible only to a message recipient address entered into the second address field.

There is also provided a computer-readable medium which stores a program for generating messages. The program includes an address entry code segment that allows entry of at least one message recipient address into a first address field and entry of at least one message recipient address into a second address field, a message entry code segment that allows entry of a first message into a first message field and entry of a second message into a second message field, and a transmission control code segment that controls transmission of the first message to each message recipient address entered into the first address field and controls transmission of the first and second messages to each message recipient address entered into the second address field.

The program may include a message generating code segment that generates a message, addressed to each message recipient address entered into the first address field, which includes the first message but not the second message, and generates a message, addressed to each message recipient address entered into the second address field, which includes the first message and the second message. The program may include a message generating code segment that generates a message, addressed to each message recipient address entered into the first and second address fields, which includes the first message and the second message, where the second message is visible only to a message recipient address entered into the second address field. The first and second address fields and the first and second message fields may be included in a single data structure.

### BRIEF DESCRIPTION OF THE DRAWINGS

The present invention will become more fully understood from the detailed description given hereinbelow and the accompanying drawings, which are given by illustration only, and thus are not limitative of the present invention, and wherein:
FIG. 1 illustrates an exemplary apparatus for transmitting a message according to an aspect of the present invention;
FIG. 2 illustrates an exemplary structure of a table into which data for transmitting messages to different groups of recipients is entered according to an aspect of the present invention;
FIG. 3 is a flow chart showing a process of transmitting different messages to different groups of recipients according to an aspect of the present invention; and
FIG. 4 is a flow chart showing an alternate process of transmitting different messages to different groups of recipients according to an aspect of the present invention.

### DETAILED DESCRIPTION OF THE INVENTION

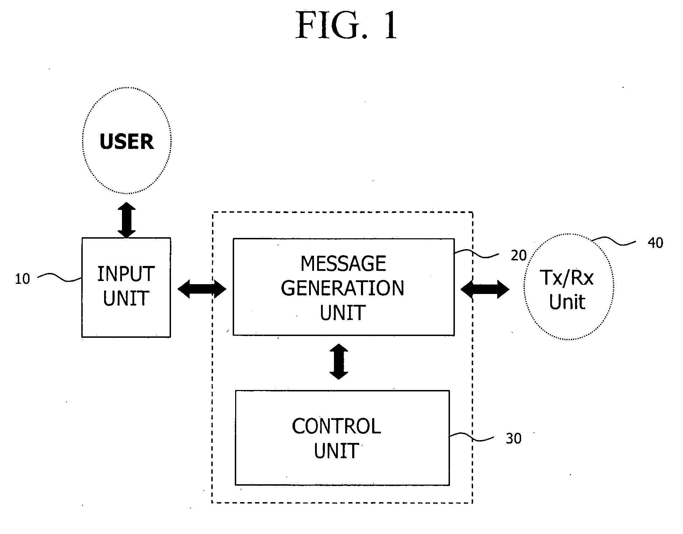

FIG. 1 illustrates an exemplary apparatus for transmitting a message according to an aspect of the present invention. The apparatus includes an input unit 10, a message generation unit 20, a control unit 30 and a transmission unit 40. The message generation unit 20 generates messages which are addressed to recipient addresses entered by a user through the input unit 10. The control unit 30 controls the transmission unit 40 to transmit messages generated by the message generation unit 20. The apparatus may be implemented in a variety of terminals which are capable of transmitting messages, such as, for example, text message or emails. For example, the apparatus may be implemented in a computer, a personal digital assistant, a mobile phone, and the like.

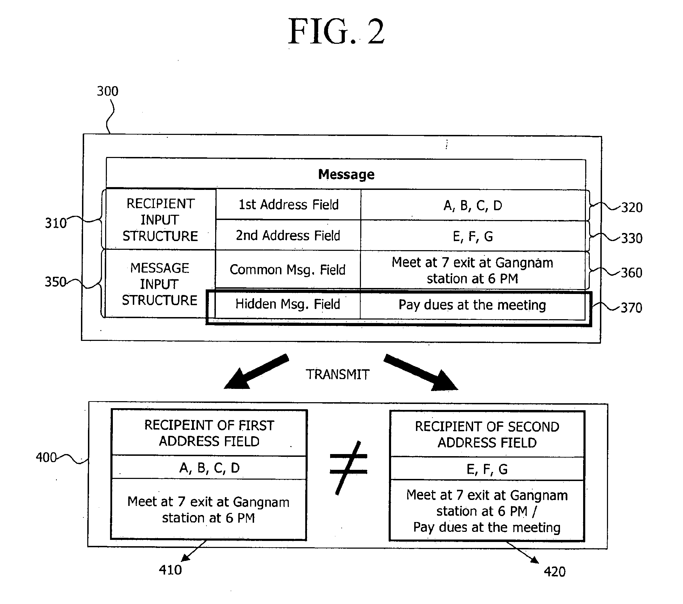

FIG. 2 illustrates an exemplary structure of a table 300, generated in the message generation unit 20, into which data for transmitting messages to different groups of recipients is entered according to an aspect of the present invention. The table 300 shown in FIG. 2 includes a recipient input structure 310 and a message input structure 350. The recipient input structure 310 includes a first address field 320, into which the addresses of a first group of recipients is entered, and a second address field 330, into which the addresses of a second group of recipients is entered. Each group of recipients includes one or more recipients. The addresses of the recipients may include, but are not limited to, a telephone number or email address, for example. The message input structure includes a common message field 360, into which a common message is entered, and a hidden message field 370, into which a hidden message is entered. The common message is destined for the first and second groups of recipients, and the hidden message is destined for only the second group of recipients.

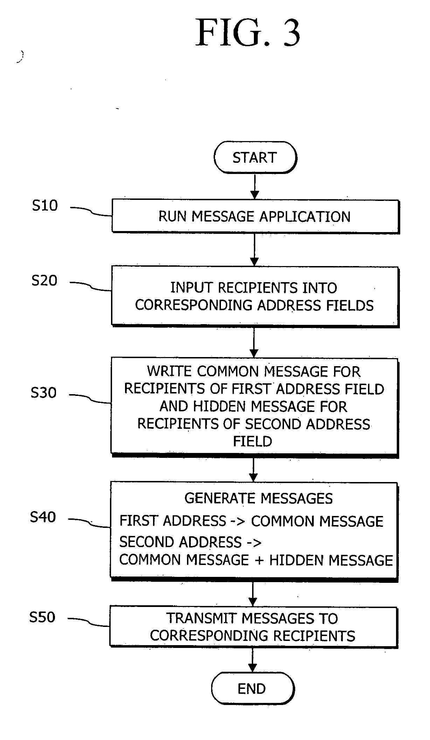

FIG. 3 is a flow chart showing a process of transmitting different messages to different groups of recipients according to an aspect of the present invention.

The process shown in FIG. 3 begins when a user runs a message service application (S10). For example, a user may open a messaging service application on his mobile handset. The user then enters, via input unit 10, the addresses of a first group of recipients into the first address field 320, and enters the addresses of a second group of recipients into the second address field 330 (S20).

For example, suppose the user is a leader of a group who wishes to send a common message to all of the members of his group (e.g., members A, B, C, D, E, F and G), and send a separate message to only the members of his group who have not paid their dues (e.g., members E, F and G). In this case, the user would enter the addresses (e.g., telephone number, email address, etc.) of members A, B, C and D into the first address field 320, and enter the addresses of members E, F and G into the second address field 330.

The user then enters, in the common message field 360, via input unit 10, a common message to be transmitted to all of the addresses in the first and second address fields 320 and 330, and enters, in the hidden message field 370, a hidden message to be transmitted only to the addresses in the second address field 330 (S30).

For example, the user may enter a meeting date and time and an agenda into the common message field 360, and enter a request to pay dues in the hidden message field 370.

The message generation unit 20 then generates a first message which is to be transmitted to the addresses of the first group of recipients (e.g., members A, B, C and D) listed in the first address field 320, and generates a second message which is to be transmitted to the second group of recipients (e.g., members E, F and G) listed in the second address field 330 (S40). The first message includes the common message stored in the common message field 360, and the second message includes both the common message and the hidden message stored in the hidden message field 370.

Thus, in the above example, the members who have paid their dues (A, B, C and D) will receive a message notifying them of the meeting date and time and agenda, and the members who have not paid their dues (E, F and G) will receive a message notifying them of the meeting date and time and agenda, as well as a message requesting them to pay their dues.

The message generation unit 20 informs the control unit 30 when it has generated the messages. The control unit 30 then controls the transmission unit 40 to transmit the generated messages (S50). FIG. 2 illustrates the messages 400 which are transmitted by the transmission unit 40. As shown in FIG. 2, first message 410 is transmitted to the first group of recipients, and second message 420 is transmitted to the second group of recipients.

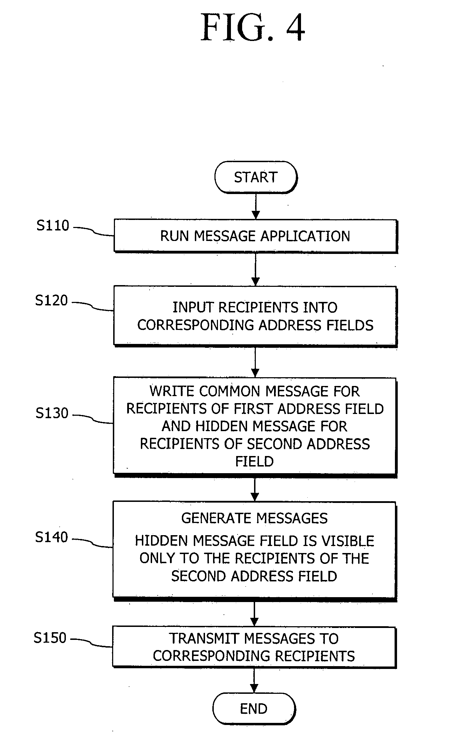

FIG. 4 is a flow chart showing an alternate process of transmitting different messages to different groups of recipients according to an aspect of the present invention.

Steps 110, 120 and 130 of the process illustrated in FIG. 4 correspond to steps 10, 20 and 30, respectively, of the process illustrated in FIG. 3. However, the process of FIG. 4 differs from the process of FIG. 3, in that the message generation unit 20 generates a single message which is to be transmitted to all of the recipients of the first and second groups (S140). The single message includes the common message stored in the common message field 360 and the hidden message stored in the hidden message field 370. Although the hidden message is thus transmitted to all of the recipients of the first and second groups, it is set so that it is visible to only the recipients of the second group.

The message generation unit 20 informs the control unit 30 when it has generated the messages. The control unit 30 then controls the transmission unit 40 to transmit the generated messages (S150).

Of course, the order of inputting the recipient addresses (S20, S120) and inputting the common and hidden messages (S30, S130) by the user in the processes described above may be switched. That is, step S30 may be performed before step S20, and step S130 may be performed before step S120.

The present invention, as described above, thus allows a user to transmit special additional information to specific recipients in a convenient fashion when transmitting information using one-to-many message communication.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

In accordance with various embodiments of the present disclosure, the methods described herein may be implemented by software programs executable by a processor. The present disclosure contemplates a computer-readable medium that includes instructions or receives and executes instructions responsive to a propagated signal. The term "computer-readable medium" shall include any medium that is capable of storing, encoding or carrying a set of instructions for execution by a processor to perform any one or more of the methods or operations disclosed herein.

In a particular non-limiting, exemplary embodiment, the computer-readable medium can include a solid-state memory such as, for example, a memory card or other package that houses one or more non-volatile read-only memories. Further, the computer-readable medium may be a random access memory or other volatile re-writable memory. Accordingly, the disclosure is considered to include any one or more of a computer-readable medium or a distribution medium and other equivalents and successor media, in which data or instructions may be stored.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Accordingly, the disclosure and the figures are to be regarded as illustrative rather than restrictive.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The above disclosed subject matter is to be considered illustrative, and not restrictive, and the appended claims are intended to cover all such modifications, enhancements, and other embodiments which fall within the true spirit and scope of the present invention. Thus, to the maximum extent allowed by law, the scope of the present invention is to be determined by the broadest permissible interpretation of the following claims and their equivalents, and shall not be restricted or limited by the foregoing detailed description.

## Claims

1. An apparatus for transmitting a message, comprising:
a message generator in which a data structure is generated, the data structure comprising a plurality of address fields, each address field including at least one message recipient address, the message generator generating a message which includes a common message.field and a hidden message field; and
a controller which controls transmission of the generated message to message recipient addresses entered into the plurality of address fields.

2. The apparatus for transmitting a message according to claim 1, wherein the message generator generates a first message which includes a common message entered into the common message field and a second message which includes the common message and a hidden message entered into the hidden message field.

3. The apparatus for transmitting a message according to claim 2, wherein the plurality of address fields comprises a first address field and a second address field.

4. The apparatus for transmitting a message according to claim 3, wherein the controller controls transmission of the first message to at least one message recipient address entered into the first address field and transmission of the second message to at least one message recipient address entered into the second address field.

5. The apparatus for transmitting a message according to claim 1, wherein the message generator sets contents entered into the hidden message field to be visible only to recipients whose addresses are entered into a specific address field of the plurality of address fields.

6. The apparatus for transmitting a message according to claim 5, wherein the controller controls transmission of the generated message to all of the message recipient addresses included in each of the plurality of address fields.

7. The apparatus for transmitting a message according to claim 1, wherein the data structure comprises a table comprising a recipient input structure and a message input structure.

8. The apparatus for transmitting a message according to claim 7, wherein the recipient input structure comprises the plurality of address fields, the plurality of address fields comprising a first address field and a second address field.

9. The apparatus for transmitting a message according to claim 8, wherein recipients whose addresses are entered into the second address field receive a common message and a hidden message.

10. The apparatus for transmitting a message according to claim 8, wherein recipients whose addresses are entered into the second address field receive a hidden message.

11. The apparatus for transmitting a message according to claim 7, wherein the message input structure comprises a common message field and a hidden message field.

12. The apparatus for transmitting a message according to claim 11, wherein a hidden message entered into the hidden message field is visible only to specific recipients.

13. A method for transmitting a message, comprising:
entering at least one message recipient address into a first address field and entering at least one message recipient address into a second address field;
entering a first message into a first message field and entering a second message into a second message field;
transmitting the first message to each message recipient address entered into the first address field; and
transmitting the first and second messages to each message recipient address entered into the second address field.

14. The method according to claim 13, wherein the second message is transmitted only to a message recipient address entered into the second address field.

15. The method according to claim 13, further comprising transmitting the second message to each message recipient address entered into the first address field, wherein the second message is visible only to a message recipient address entered into the second address field.

16. A method for transmitting a message, comprising:
entering at least one message recipient address into a first address field and entering at least one message recipient address into a second address field;
entering a common message and a hidden message; and
transmitting the common message and the hidden message to each message recipient address entered into the first and second address fields, wherein the hidden message is visible only to a message recipient address entered into the second address field.

17. A computer-readable medium which stores a program for generating messages, the program comprising:
an address entry code segment that allows entry of at least one message recipient address into a first address field and entry of at least one message recipient address into a second address field;
a message entry code segment that allows entry of a first message into a first message field and entry of a second message into a second message field; and
a transmission control code segment that controls transmission of the first message to each message recipient address entered into the first address field and controls transmission of the first and second messages to each message recipient address entered into the second address field.

18. The computer-readable medium according to claim 17, wherein the program further comprises a message generating code segment that generates a message, addressed to each message recipient address entered into the first address field, which includes the first message but not the second message, and generates a message, addressed to each message recipient address entered into the second address field, which includes the first message and the second message.

19. The computer-readable medium according to claim 17, wherein the program further comprises a message generating code segment that generates a message, addressed to each message recipient address entered into the first and second address fields, which includes the first message and the second message, wherein the second message is visible only to a message recipient address entered into the second address field.

20. The computer-readable medium according to claim 17, wherein the first and second address fields and the first and second message fields are included in a single data structure.
